# FASCICULE DE BREVET EUROPEEN

(11) **EP 2 058 746 B1**
(45) Date de publication et mention de la délivrance du brevet: **18.11.2015**
(21) Numéro de dépôt: 08290496.2
(22) Date de dépôt: 29.05.2008
(51) Int. Cl.: G06F 21/34

(54) **Entité électronique portable, station hôte et procédé associé**
Tragbare elektronische Einheit, Hoststation und entsprechendes Verfahren
Portable electronic entity, host station and associated method

(30) Priorité: 31.05.2007 FR 0755389
(43) Date de publication de la demande: 13.05.2009
(73) Titulaire: OBERTHUR TECHNOLOGIES, 92700 Colombes (FR)
(72) Inventeur: Jayet, Stéphane, 69330 Meyzieu (FR); Leduc, Olivier, 69300 Caluire et Cuire (FR); Moyart, Didier, 69006 Lyon (FR)
(74) Mandataire: Santarelli

(56) Documents cités:
- EP-A1- 1 248 179
- DE-A1- 3 411 570
- US-A1- 2005 154 894
- US-A1- 2007 006 290

## Description

La présente invention concerne une entité électronique portable et une station hôte, ainsi qu'un procédé associé.

La station hôte peut être un ordinateur personnel, portable ou fixe, un terminal de travail relié à un serveur, un ordinateur central (« *mainframe computer »),* un ordinateur de poche ou tout autre appareil électronique capable d'exécuter des opérations.

L'entité électronique portable (ou amovible) peut être une clef électronique. Elle peut aussi être une carte à microcircuit ou une radio-étiquette.

L'entité électronique portable comporte un ou plusieurs composants électroniques. Ces composants électroniques peuvent être, par exemple, une mémoire non volatile et un système de lecteur de carte à microcircuit, comprenant éventuellement une carte à microcircuit, cette carte étant amovible ou installée à demeure.

L'entité électronique portable peut comporter également un circuit électronique qui peut être un circuit intégré, comportant par exemple un microprocesseur. Le circuit électronique peut être un microcontrôleur comportant un microprocesseur, des mémoires et des périphériques de communication, et contrôlant éventuellement la mémoire précédemment décrite.

Il est d'usage que les composants électroniques possèdent des identifiants. Ceux-ci sont souvent donnés par les constructeurs à leurs composants. Il peut s'agir de chaînes hexadécimales, binaires, ou d'autres types d'informations.

Un tel identifiant comporte souvent une partie dite « partie commune » qui est identique pour tous les composants électroniques d'un même modèle et une partie dite « partie unique », spécifique d'un exemplaire physique du composant donné au sein de la famille des composants d'un même modèle.

On notera que la notion de famille peut varier en fonction du fabricant de composants électroniques ; par exemple pour certains constructeurs, des microcontrôleurs identiques ne font partie de la même famille que si le contenu de leur mémoire morte est identique, mais d'autres constructeurs peuvent estimer que cette condition n'est pas indispensable. La même remarque est valable aussi pour des contrôleurs de mémoire si une mémoire morte est rattachée à chaque contrôleur de mémoire

Par ailleurs, les composants électroniques possèdent des fonctionnalités. Dans de nombreuses situations, une fonctionnalité d'un premier composant électronique est complémentaire, du point de vue de la station hôte (y compris les utilisateurs humains ou matériels de la station hôte), d'une fonctionnalité d'un deuxième composant électronique.

La complémentarité peut, à titre d'exemple, résider dans le fait que l'indisponibilité, par exemple l'absence, de la fonctionnalité du deuxième composant électronique (respectivement du premier composant) entraîne que la fonctionnalité du premier composant électronique (ou respectivement du deuxième composant électronique) est inopérante, au moins partiellement, par exemple sans effet.

A titre d'exemple, la fonctionnalité d'un premier composant peut être la mise à disposition de la station hôte de données sensibles contenues dans ce premier composant, et la fonctionnalité d'un second composant complémentaire de la fonctionnalité du premier composant du point de vue de la station hôte peut être la mise à disposition de la station hôte de données sensibles contenues dans ce deuxième composant et complémentaires du point de vue de la station hôte des données sensibles contenues dans le premier composant électronique.

Un autre exemple porte sur un premier composant comportant des moyens pour décrypter des données mémorisées dans un deuxième composant. Une application exécutée par la station hôte lit les données mémorisées dans le deuxième composant, et les envoie au premier composant qui les décrypte et les renvoie à la station hôte.

D'autres fonctionnalités de composants électroniques sont naturellement envisageables.

La présente invention aborde le problème qui se pose dans une situation où au moins deux composants électroniques sont en relation avec une station hôte, et où le premier des composants électronique comporte une fonctionnalité complémentaire, du point de vue de la station hôte, de la fonctionnalité d'un deuxième des composants électroniques.

Dans une telle situation, il serait avantageux que la station hôte puisse reconnaître, automatiquement ou de manière autonome, quel composant est complémentaire de l'autre, afin, par exemple, de ne mettre en oeuvre une application utilisant les fonctionnalités complémentaires qu'en présence des deux composants.

Or il n'existe pas pour le moment de solution pour permettre à la station hôte de mettre en relation automatiquement ou de manière autonome les deux composants possédant des fonctionnalités complémentaires pour pouvoir ainsi utiliser ces fonctionnalités.

On notera que le problème se pose notamment quand les deux composants électronique sont dans la même entité électronique portable.

Ce problème est notamment ressenti dans les contextes où il est souhaitable, voire impératif, que la station hôte puisse s'assurer, pour son utilisateur, qu'un des composants n'a pas été illicitement remplacé par un autre au sein d'une même entité électronique portable.

Pour résoudre le problème ci-dessus dans différents contextes, la présente invention propose, une station hôte selon la revendication 1.

Cette station hôte offre l'avantage que la vérification d'un appariement selon une règle prédéterminée permet de disposer d'une information indiquant la réalisation ou la non-réalisation de l'appariement, information dont peut ensuite dépendre la réalisation d'une application, la communication avec un utilisateur, ou avec un calculateur extérieur à la station hôte.

Dans le cas où les moyens de communication et les identifiants sont conformes à la norme USB, celle-ci servant de convention prédéterminée, on rappelle qu'un identifiant comporte les champs suivants : identifiant de vendeur (VID, commun à tous les composant électroniques fabriqués par un même fabricant ou commercialisés par un même vendeur), identifiant de produit (PID, commun à tous les composants électroniques d'un même modèle), numéro de série (SN) et chaîne de description de produit (Product Description String).

Selon une convention particulière, la partie commune de l'identifiant est la concaténation des VID, PID et Product Description String, la partie unique de l'identifiant étant SN.

Selon une autre convention particulière, la partie commune de l'identifiant est la concaténation des VID et PID seulement, et la partie unique de l'identifiant est la concaténation de Product Description String et SN.

Selon une troisième convention particulière, la partie commune de l'identifiant est la concaténation des VID et PID, alors que la partie unique est SN, le Product Description String n'intervenant pas à ce niveau.

On rappelle à ce sujet qu'avec certains systèmes d'exploitation, deux clefs USB ne peuvent pas fonctionner si leurs identifiants de vendeur, identifiants de produit et numéros de série sont identiques.

Préférentiellement, un appariement suivant ladite règle prédéterminée est réalisé lorsqu'une égalité arithmétique prédéterminée entre une partie de ladite partie unique du premier identifiant et la même partie de ladite partie unique dudit deuxième identifiant est réalisée.

Préférentiellement, ladite partie comprend un numéro de série conforme à la norme USB. Dans ce cas, la convention prédéterminée est conforme à la norme USB.

Selon un mode de réalisation préféré, ladite égalité arithmétique est l'identité.

Selon une caractéristique avantageuse, lesdits moyens de vérification comprennent une application dite « de vérification » apte à déterminer ledit premier identifiant.

Préférentiellement, ladite application de vérification est apte à comparer
- un identifiant attribué à un volume logique correspondant audit premier composant électronique,
- avec chaque identifiant attribué aux volumes logiques correspondant aux composants électroniques communiquant avec ladite station hôte par des moyens de communication conformes à une norme prédéterminée,
en sorte de déterminer ledit premier identifiant.

Selon un mode de réalisation, ledit identifiant attribué à un volume logique correspondant audit premier composant électronique est obtenu en utilisant la commande API Windows™ GetVolumeNameForVolumeMountPoint, et chaque identifiant attribué aux volumes logiques correspondant aux composants électroniques communiquant avec ladite station hôte par des moyens de communication conformes à une norme prédéterminée est obtenu en utilisant au moins les commandes API Windows™ SetupDiEnumDevicelnfo et GetVolumeNameForVolumeMountPoint.

Préférentiellement, la station hôte est caractérisée en ce qu'elle comporte en outre des moyens de mise en oeuvre d'une recherche parmi une pluralité de composants électroniques possédant chacun un identifiant conforme à ladite convention et dont la partie commune est différente de celle dudit premier identifiant, d'un composant électronique dont la partie unique de l'identifiant est appariée avec la partie unique dudit premier identifiant.

Cette caractéristique permet d'identifier ou localiser un composant électronique pour lequel un appariement est réalisé parmi une pluralité de composants en communication avec la station hôte.

Préférentiellement, la station hôte est caractérisée en ce qu'elle comporte en outre des moyens pour exécuter une application dite « dépendante » et des moyens pour soumettre une exécution d'une partie au moins de ladite application à ladite vérification dudit appariement.

Cela permet d'utiliser l'information portant sur l'appariement de telle sorte qu'elle détermine le déroulement de l'exécution d'une application.

Préférentiellement, la station hôte est caractérisée en ce que ladite application dépendante est apte à utiliser une fonctionnalité dudit premier composant dite « première » et une fonctionnalité dudit second composant dite « seconde ».

Cela permet d'utiliser l'information portant sur l'appariement de telle sorte que l'application utilise les fonctionnalités des deux composants uniquement si ceux-ci sont appariés.

La station hôte peut préférentiellement être caractérisée en ce que ladite application dépendante comprend un programme de vérification d'identité, la fonctionnalité du premier composant comprenant la mise à disposition de ladite application d'un premier ensemble de données biométriques ou personnelles et la fonctionnalité du deuxième composant comprenant la mise à disposition de ladite application d'un deuxième ensemble de données biométriques ou personnelles.

Alternativement, ladite application comprend un navigateur réseau et la fonctionnalité dudit premier composant comprend la mise à disposition de ladite application de données personnelles et que la fonctionnalité dudit second composant comprend la mise à disposition de ladite application d'une clef cryptographique.

Alternativement, les connexions des entités portables à une station hôte peuvent se faire par des moyens de communication conformes à la norme ISO 7816, ou encore conforme à la norme 14443, ou encore à toute autre norme connue de l'homme du métier.

Selon un mode de réalisation particulier, le système d'exploitation de ladite station hôte est une version de Windows™.

Le système d'exploitation peut être une version de Windows Vista™, Windows XP™, Windows NT™, ou alternativement une version de Mac OS™, Unix, Linux, ou un système mainframe.

La présente invention propose également une entité électronique portable selon les revendications.

Cette entité électronique portable offre l'avantage que la vérification d'un appariement selon une règle prédéterminée permet de disposer d'une information indiquant la réalisation ou la non-réalisation de l'appariement, et dont on peut ensuite faire dépendre la réalisation d'une application, la communication avec un utilisateur, ou avec un calculateur extérieur à la station hôte ou à l'entité électronique portable.

Les entités électroniques portables selon la deuxième et la troisième définition générale de l'invention peuvent avantageusement être caractérisée comme suit :
Préférentiellement, un appariement suivant ladite règle prédéterminée est réalisé lorsqu'une égalité arithmétique prédéterminée entre une partie de ladite partie unique du premier identifiant et la même partie de ladite partie unique dudit deuxième identifiant est réalisée.
Préférentiellement, ladite partie comprend un numéro de série conforme à la norme USB. Dans ce cas, la convention prédéterminée est conforme à la norme USB.
Préférentiellement, ladite égalité arithmétique est l'identité.
Préférentiellement, lesdits moyens de communication avec une station hôte sont conformes à la norme USB.
Préférentiellement, le premier composant électronique est un ensemble comprenant un contrôleur de mémoire et une mémoire non volatile rattachée audit contrôleur de mémoire.

Différents types de mémoire non volatile existent et peuvent être utilisés isolément ou en combinaison. Il s'agit par exemple de la mémoire non réinscriptible (ROM), de la mémoire réinscriptible (NVRAM, par exemple de type EEPROM ou Flash RAM).

Dans le cadre de la troisième définition générale de l'invention, préférentiellement, lesdits seconds moyens de communication comprennent un lecteur de carte à microcircuit.

Un tel lecteur peut également être présent dans l'entité électronique portable faisant l'objet de la deuxième définition de l'invention, notamment si l'un des composants de cette entité électronique portable est une carte à microcircuit. Plus généralement, des moyens de communication avec les composants électroniques peuvent être présents dans l'entité électronique portable de la deuxième définition.

Alternativement, le second composant électronique est monté sur le même circuit imprimé que le premier composant.

Préférentiellement, une carte à microcircuit est insérée dans ledit lecteur de carte à microcircuit, et ladite carte à microcircuit est personnalisée avec un identifiant, par exemple le second identifiant.

Dans le cadre des deuxième et troisième définition de l'invention, selon une caractéristique avantageuse, lesdits moyens de mise en oeuvre d'une vérification d'un appariement comprennent une application dite « de vérification » apte à être mise en oeuvre par la station hôte.

Préférentiellement, ladite application de vérification est à lancement automatique après la connexion de l'entité électronique portable à la station hôte.

Selon un mode de réalisation, ledit premier composant électronique comprenant une mémoire conservant les instructions de ladite application de vérification, ladite application de vérification est apte à déterminer ledit premier identifiant.

Préférentiellement, ladite application de vérification est apte à comparer un identifiant attribué à un volume logique correspondant au périphérique mémorisant ladite application, avec chaque identifiant attribué aux volumes logiques correspondant aux composants électroniques communiquant avec ladite station hôte par des moyens de communication conformes à une norme prédéterminée, en sorte de déterminer ledit premier identifiant.

Par exemple, ledit identifiant attribué à un volume logique correspondant au périphérique mémorisant ladite application est obtenu en utilisant la commande API Windows™ GetVolumeNameForVolumeMountPoint, et chaque identifiant attribué aux volumes logiques correspondant aux composants électroniques communiquant avec ladite station hôte par des moyens de communication conformes à une norme prédéterminée est obtenu en utilisant au moins les commandes API Windows™ SetupDiEnumDevicelnfo et GetVolumeNameForVolumeMountPoint.

Préférentiellement, ledit identifiant est mémorisé dans un fichier inscrit dans une zone mémoire de ladite carte à microcircuit.

Préférentiellement, l'entité électronique portable comporte en outre des moyens de mise en oeuvre d'une recherche parmi une pluralité de composants électroniques communiquant avec la station hôte, possédant chacun un identifiant conforme à ladite convention et dont la partie commune de l'identifiant est différente de celle dudit premier identifiant, d'un composant électronique dont la partie unique de l'identifiant est appariée avec la partie unique dudit premier identifiant.

Ces moyens de mise en oeuvre d'une recherche peuvent être une application apte à être mise en oeuvre sur une station hôte communiquant avec l'entité électronique portable, et peuvent notamment être inclus dans l'application de vérification.

Cette caractéristique permet d'identifier ou localiser un composant électronique pour lequel un appariement est réalisé parmi une pluralité de composants en communication avec la station hôte.

Préférentiellement, elle comporte en outre une mémoire conservant des instructions d'une application dite dépendante apte à être au moins partiellement chargée sur une station hôte, et des moyens pour soumettre l'exécution d'une partie au moins de ladite application dépendante à ladite vérification dudit appariement.

Préférentiellement, ledit premier composant électronique comprend ladite mémoire conservant des instructions d'une application dépendante.

Par simplicité l'application dépendante et l'application de vérification peuvent être confondues, une partie de l'application assurant la fonction de recherche et/ou de vérification, une partie étant dépendante du résultat de la vérification.

Préférentiellement, ladite application est apte à utiliser une fonctionnalité dudit premier composant dite « première » et une fonctionnalité dudit second composant dite « seconde ».

Selon un mode de réalisation préféré, ladite application comprend un navigateur réseau et la fonctionnalité dudit premier composant comprend la mise à disposition de ladite application de données personnelles et la fonctionnalité dudit deuxième composant comprend la mise à disposition de ladite application d'une clef cryptographique.

Par exemple, ledit navigateur est adapté au réseau Internet, ou ledit navigateur est adapté à un réseau de télécommunications mobiles.

Préférentiellement, ledit navigateur est sécurisé par l'utilisation des fonctions de sécurisation de la carte à microcircuit. Et préférentiellement, ledit navigateur réseau n'autorise l'accès qu'à des adresses Internet prédéterminées.

Selon une variante de réalisation, ladite application comprend un programme de vérification d'identité et la fonctionnalité du premier composant comprend la mise à disposition de ladite application d'une photographie d'identité enregistrée et la fonctionnalité du deuxième composant comprend la mise à disposition de ladite application de données textuelles d'identité.

Préférentiellement, l'entité électronique portable est caractérisée en ce qu'elle comporte en outre des moyens de mise en oeuvre d'une détermination de l'identifiant dudit premier composant électronique, ou du composant électronique qui comprend ladite mémoire conservant des instructions d'une application.

Cela permet d'utiliser une application dont le code n'inclut pas l'identifiant du composant électronique, mais qui au cours de son exécution est capable de le déterminer. Il en résulte des économies en matière de production de l'entité électronique portable, du fait du nombre des étapes de production qui est ainsi réduit.

Préférentiellement, lesdits moyens de mise en oeuvre d'une détermination de l'identifiant dudit premier composant électronique comprennent des moyens d'utilisation d'au moins une fonction d'un système d'exploitation de ladite station hôte.

Alternativement, les moyens de communication avec la station hôte peuvent aussi être conformes à la norme ISO 7816 ou encore être conforme au format des cartes de MMC (acronyme de « MultiMedia Card » pour carte multimédia), ou des cartes SD (pour « Secure Digital »), par exemple.

L'entité électronique portable peut également être un téléphone, un assistant personnel électronique (PDA), ou un document électronique, c'est-à-dire un document papier avec un microcircuit comportant des moyens de communication par exemple sans contact dans l'épaisseur de l'une de ses pages, tel qu'un passeport électronique.

La présente invention propose également un procédé selon les revendications.

Préférentiellement, l'appariement suivant ladite règle prédéterminée est réalisé lorsqu'une égalité arithmétique prédéterminée entre une partie de ladite partie unique du premier identifiant et la même partie de ladite partie unique dudit deuxième identifiant est réalisée.

Préférentiellement, ladite partie comprend un numéro de série conforme à la norme USB. Dans ce cas, la convention prédéterminée est conforme à la norme USB.

Préférentiellement, le procédé comporte en outre une étape de recherche parmi une pluralité de composants électroniques communiquant avec ladite station hôte et possédant chacun un identifiant conforme à ladite convention prédéterminée et dont la partie commune est différente de celle dudit premier identifiant, d'un composant électronique dont la partie unique de l'identifiant est appariée avec la partie unique dudit premier identifiant.

Selon une caractéristique avantageuse, le procédé comprend en outre une étape de comparaison
- d'un identifiant attribué par un système d'exploitation de ladite station hôte à un volume logique correspondant audit premier composant électronique,
- avec chaque identifiant attribué par ledit système d'exploitation à un volume logique correspondant à un périphérique physique communiquant avec ladite station hôte sur laquelle ladite application est exécutée par des moyens de communication conformes à la norme USB,
en sorte de déterminer l'identifiant dudit premier composant électronique.

Préférentiellement, le procédé comprend une étape d'obtention de l'identifiant attribué à un volume logique correspondant au périphérique mémorisant ladite application en utilisant la commande API Windows™ GetVolumeNameForVolumeMountPoint, et une étape d'obtention de chaque identifiant attribué aux volumes logiques correspondant aux composants électroniques communiquant avec ladite station hôte par des moyens de communication conformes à une norme prédéterminée en utilisant au moins les commandes API Windows™ SetupDiEnumDevicelnfo et GetVolumeNameForVolumeMountPoint.

Préférentiellement, le procédé comporte une étape d'exécution d'une application et une étape de soumission d'au moins une partie de ladite exécution à ladite vérification dudit appariement.

Préférentiellement, le procédé comporte une étape de détermination ou de mémorisation ou d'obtention, de l'identifiant dudit premier composant électronique, préférentiellement en utilisant au moins une fonction d'un système d'exploitation de la station hôte.

Préférentiellement, le procédé selon l'invention possède des caractéristiques similaires à celles décrites précédemment pour la station hôte selon l'invention ou l'entité électronique portable selon l'invention, ces caractéristiques étant prises une par une ou en combinaison.

Egalement, le procédé comprend une étape de lecture ou de mémorisation ou d'obtention d'un identifiant d'une carte à puce comprise dans ledit second composant électronique, ledit identifiant étant inscrit dans un fichier dans une mémoire de la carte à puce.

La présente invention propose également un programme d'ordinateur comprenant une suite d'instructions aptes, lorsqu'elles sont exécutées par un microprocesseur, à mettre en oeuvre un procédé selon l'invention.

D'autres caractéristiques et avantages de l'invention apparaîtront à la lumière de la description détaillée ci-après et des dessins dans lesquels :
- la Figure 1 est une vue d'un mode de réalisation d'une entité électronique portable selon l'invention, connectée à une station hôte selon l'invention.
- la Figure 2 est une vue d'un mode de réalisation d'une station hôte selon l'invention, à laquelle est connectée une entité électronique portable.

Un premier mode de réalisation de l'invention permet la mise en oeuvre d'un navigateur sécurisé pour accéder au serveur d'une banque.

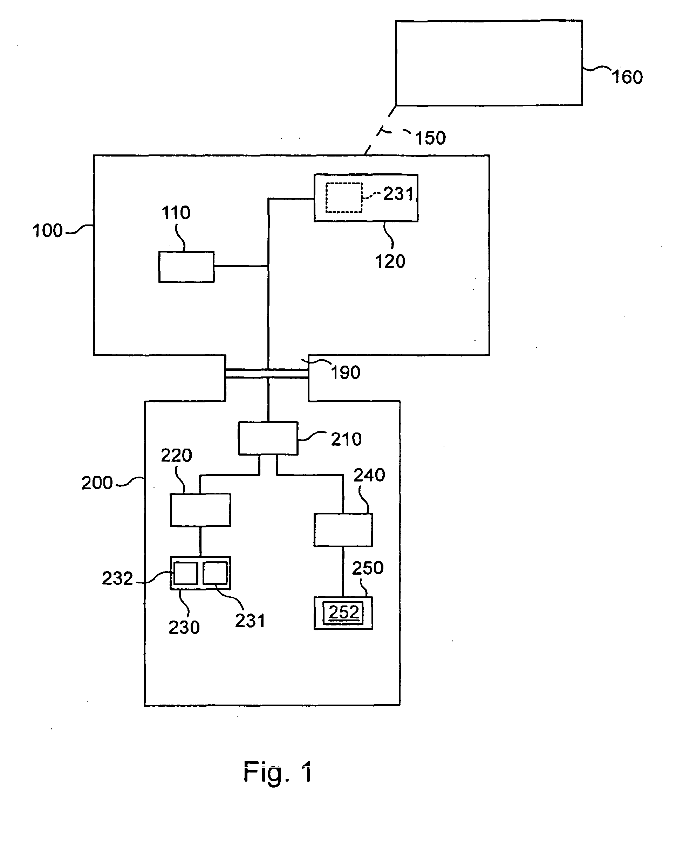

En référence à la figure 1, une station hôte 100 comprend un processeur 110 et une mémoire 120, ainsi qu'un premier connecteur USB 190 et un deuxième connecteur USB (non représenté). La station hôte 100 est un ordinateur personnel fonctionnant avec un système d'exploitation disponible dans le commerce, au domicile d'un particulier et est connectée au réseau Internet 150, qui lui permet de communiquer avec le serveur distant 160 d'une banque.

Un utilisateur connecte une clef USB 200, c'est-à-dire une entité électronique portable possédant des moyens de communication avec une station hôte conforme à la norme USB, au connecteur 190. Cette clef contient les données bancaires personnelles de l'utilisateur et lui a été fournie par sa banque.

Une deuxième clef USB 300 (non représentée) est connectée au deuxième connecteur, soit par erreur, soit parce que plusieurs personnes utilisent la station hôte 100 simultanément.

La clef USB 200 comprend un contrôleur 220 de mémoire flash, une mémoire flash 230 rattachée au contrôleur 220, un lecteur 240 de carte à microcircuit et une carte à microcircuit 250 introduite dans le lecteur 240.

Le contrôleur 220 de mémoire flash et le lecteur 240 sont reliés à un concentrateur 210 (ou *« hub* ») de la clef 200.

Le contrôleur 220 de mémoire flash est conforme à la classe des « *Mass Storage Class devices* » (voir par exemple « USB Mass Storage Class Specification Overview, revision 1.2 », USB Implementers Forum, Inc.). Son identifiant est VID/PID1/SN1.

La mémoire flash 230 a reçu des données personnelles 232 (nom, prénom, numéro de compte bancaire, identifiant personnel), spécifiques au porteur de la clef USB 200. Ces données ont été enregistrées soit à l'émission de la clef USB 200 par la banque, soit ultérieurement.

Le lecteur 240 est conforme à la classe des « *Integrated Circuit(s) Cards Interface Devices* » (voir par exemple « Specification for Integrated Circuit(s) Cards Interface Devices » rev. 1.1, USB Implementers Forum, Inc.).

La carte à microcircuit 250 est conforme à la classe des « *Integrated Circuit(s) Card devices»* (voir par exemple « Specification for USB Integrated Circuit(s) Card Devices Revision 1.0 », USB Implementers Forum, Inc.).

Cette carte 250 est dans le cas particulier présenté, une carte SIM, au format ID-000 et conforme à la norme ISO 7816. La carte 250 est personnalisée de manière différente pour chaque clef. Un identifiant lui a été fourni lors d'une étape de personnalisation électrique, au cours de laquelle un fichier a été créé dans la mémoire de la carte à microcircuit, un identifiant étant inscrit dans le fichier.

Elle provient du même vendeur que le contrôleur 220, son identifiant de vendeur étant donc VID. Son identifiant de produit est celui de la famille des cartes à microcircuit noté ici PID2 et différent de PID1. Elle a été personnalisée de telle sorte que son numéro de série SN1 soit le même que celui du contrôleur 220. Son identifiant est VID/PID2/SN1.

Le lecteur de carte à microcircuit 240 n'a pas d'identifiant.

Ces éléments 220, 230, 240, 250 sont compatibles avec des pilotes (« *drivers »* selon la terminologie anglo-saxonne) standards USB.

Une application 231 est mémorisée dans la mémoire flash 230. Il s'agit d'un navigateur Internet pouvant fonctionner sur la station hôte 100. Ce navigateur a été écrit pour la banque émettrice, et n'autorise que l'accès à des adresses Internet (URL) autorisées, en l'occurrence correspondant aux serveurs de la banque émettrice. Pour cela, le navigateur, avant d'afficher une page, vérifie que l'adresse est autorisée, c'est-à-dire, qu'elle correspond au serveur de la banque. Des préférences du navigateur peuvent être enregistrées dans la mémoire flash 230, à son initialisation ou ultérieurement.

Le code de l'application 231 inclut l'identifiant de produit PID1 du contrôleur 220 auquel est rattachée la mémoire morte 230, ainsi que l'identifiant PID2, qui désigne comme on l'a vu, la famille des cartes à microcircuit.

Enfin, le contrôleur 220 permet le lancement automatique de l'application 231 sur la station hôte 100 selon un mécanisme dit « *autorun »* connu de l'homme de métier.

On considère maintenant le cas où la clef USB 300 (non représentée), provenant du même fabricant que la clé USB 200, comprend un contrôleur 320 de mémoire flash d'identifiant VID/PID3/SN2 et une mémoire flash 330.

Le contrôleur 320 de mémoire flash a un identifiant de produit différent de l'identifiant de produit du contrôleur 220 de mémoire flash car le contenu de la mémoire morte du contrôleur 320 diffère du contenu de la mémoire morte du contrôleur 220. Ainsi l'identifiant de produit PID3 est différent de PID1. Il est également différent de PID2.

Par ailleurs, la mémoire flash 330 a reçu son identifiant après le contrôleur 320 et a le même numéro de série SN2. De manière importante, le numéro de série SN2 est différent du numéro de série SN1.

La clef USB 300 comprend aussi un lecteur 340 de carte à microcircuit contenant une carte à microcircuit 350 provenant du même fabricant et qui a été personnalisée de telle sorte que son numéro de série soit le même que celui du contrôleur 220, c'est-à-dire SN2. Son identifiant est donc VID/PID2/SN2.

Une application 331 est mémorisée dans la mémoire flash 330. L'application 331 peut être un autre navigateur limitant l'accès au serveur d'une banque, éventuellement identique à la banque émettrice de la clef USB 200.

L'application 231, qui comme on l'a vu est mémorisée dans la mémoire 230 de la clef USB 200, se charge automatiquement et est exécutée par l'unité centrale 110. Elle communique à partir de ce moment là avec les composants électroniques 220 et 240 par des moyens de communication conformes à la norme USB, en utilisant un cryptage des communications, de manière connue de l'homme du métier et utile dans le dispositif décrit.

Elle effectue les étapes suivantes :
Dans une première étape, l'application 231 recherche parmi les composants électroniques connectés ceux dont l'identifiant de produit est égal à PID1. Elle lit leurs numéros de série et les mémorise.
Dans une deuxième étape, l'application 231 recherche parmi les composants électroniques connectés ceux dont l'identifiant de produit est égal à PID2.
   Pour ce faire, l'application 231 crée la liste de tous les lecteurs de carte à microcircuit connectés à la station hôte 100, en utilisant par exemple la méthode faisant partie des API Windows^{™} SCardListReaders.
   Puis, pour chaque lecteur de cette liste, l'application 231 adresse une série de commandes au format APDU requérant l'identifiant de la carte contenue dans le lecteur. Elle reçoit en retour une réponse au format APDU contenant cet identifiant. Elle le compare à PID2 et retient le lecteur de carte à microcircuit si cet identifiant est effectivement égal à PID2.
Dans une troisième étape, l'application 231 sélectionne parmi les composants identifiés à la deuxième étape, uniquement ceux dont le numéro de série est égal aux numéros de série mémorisés à la première étape.
Dans une quatrième étape l'application 231 utilise les données mises à disposition par les composants identifiés à la troisième étape pour mettre en oeuvre la communication à travers le réseau avec le serveur distant 160.

Ainsi, dans la situation représentée, on a la situation suivante :
Dans la première étape, l'application 231 trouve uniquement le contrôleur 220. Elle lit alors le numéro de série du contrôleur 220, c'est-à-dire SN1, et le mémorise.
Dans la deuxième étape, l'application 231 trouve les cartes 250 et 350.
Dans la troisième étape, l'application 231 sélectionne parmi les composants 250 et 350, tous ceux dont le numéro de série est égal à SN1, et trouve alors uniquement la carte 250.
Dans la quatrième étape, l'application 231 utilise de façon conjointe les données mises à sa disposition par la carte à microcircuit 250 et la mémoire flash 230 pour établir une connexion sécurisée via le réseau 150 avec le serveur 160 distant.

Les échanges entre le navigateur 231 et le serveur 400 sont cryptés, à l'aide de moyens de cryptographie disponibles dans la carte à microcircuit 250.

L'application 231 utilise les fonctions de sécurisation disponibles dans la carte à microcircuit 250, connues de l'homme du métier et utiles dans le dispositif décrit. Elle utilise notamment une clef cryptographique, ou autres moyens cryptographiques, spécifiques à chaque carte à microcircuit ou chaque titulaire de carte.

L'application 231 assure la sécurisation de la communication avec le serveur 160 à l'aide d'un identifiant et d'un élément secret (par exemple une clef cryptographique) différents pour chaque clef ou porteur de clef. L'élément secret est par exemple mémorisé dans la carte 250 avec éventuellement divers moyens cryptographiques.

L'application 231 utilise les données personnelles 232 (nom, prénom, numéro de compte bancaire, identifiant personnel), contenues dans la mémoire flash 230 pour communiquer avec le serveur 160 de façon personnalisée.

La vérification de l'identité entre les numéros de série permet d'éviter que l'application 231 accède ou utilise des données présentes dans la mémoire 330, qui doivent rester confidentielles, car n'appartenant pas au détenteur de la clef 200.

L'application 331 de la deuxième carte peut utiliser, symétriquement, un autre identifiant et un autre élément secret mémorisé dans la carte 350, et elle n'accède pas aux données présentes dans la mémoire 260.

La solution proposée ici permet aussi d'éviter de devoir donner un identifiant au contrôleur 220 spécifique à chaque porteur, et donc tardivement dans le processus de fabrication du dispositif. Seule la carte 250 est personnalisée, et cette personnalisation est réalisée de façon peu coûteuse. Il en résulte des économies conséquentes.

Les données 232 sont alors enregistrées lors de l'utilisation de la clef USB après personnalisation. Il peut s'agir de préférences de l'utilisateur de la clef 200" de données historiques de connexion au serveur distant 160 ou de données de gestion du compte de l'utilisateur.

Selon un mode de réalisation alternatif, la station hôte 100 peut être un ordinateur portable, un assistant personnel ou un téléphone mobile communiquant avec le serveur distant 160 par un réseau de télécommunications mobiles.

Selon une variante du premier mode de réalisation ainsi décrit, l'identifiant de produit PID1 du contrôleur 220 n'est pas inclus dans le code de l'application 231.

L'application 231, une fois lancée, recherche l'identifiant du composant électronique depuis lequel elle a été lancée. Elle utilise pour cela des fonctions du système d'exploitation.

Dans une première étape, l'application 231 obtient, dès son lancement, le chemin courant dans le système de fichier, qui est celui depuis lequel elle a été lancée.

Dans une deuxième étape, l'application 231 détermine l'identifiant spécifique (appelé *guid* pour *« globally unique identifier »* ou identifiant globalement unique) attribué par le système d'exploitation au volume (ou périphérique) logique correspondant au chemin trouvé dans la première étape.

Dans une troisième étape, l'application 231 crée la liste de tous les périphériques physiques de classe USB connectés à la station 100.

Dans le cas décrit ci-dessus, elle trouve les contrôleurs de mémoire 220 et 320, et les lecteurs de carte à microcircuit 240 et 340.

Dans une quatrième étape, l'application 231 énumère tous les périphériques logiques associés à chaque périphérique physique trouvé à la troisième étape. Puis elle détermine et mémorise, pour chaque périphérique logique ainsi trouvé, le chemin dans le système de fichier correspondant.

Dans une cinquième étape, l'application 231 détermine et mémorise, pour chacun des chemins dans le système de fichier déterminés au cours de l'étape précédente, l'identifiant spécifique attribué par le système d'exploitation au volume (ou périphérique) logique correspondant.

Dans une sixième étape, l'application 231 compare l'identifiant spécifique obtenu à la deuxième étape, avec les identifiants spécifiques obtenus à la cinquième étape, et trouve ainsi l'unique périphérique physique auquel est associé l'identifiant spécifique obtenu à la deuxième étape.

Enfin, l'application 231 mémorise l'identifiant de vendeur et l'identifiant de produit du périphérique physique ainsi trouvé.

Ces étapes sont menées à l'aide de commandes d'interface de programmation API Windows^{™} dont la liste est donnée ci-dessous :
1 ère étape : getCwd
2eme étape : GetVolumeNameforVolumeMountPoint
3eme étape : SetupDiGetClassDevs
4eme étape : SetupDiEnumDevicelnfo puis
   SetDiGetDevicelnterfaceDetail
5eme étape : GetVolumeNameForVolumeMountPoint
6eme étape : CM_Get_Device_ID

Selon un deuxième mode de réalisation, l'invention permet de détecter la falsification d'un passeport électronique comportant des moyens de communication conformes à la norme USB.

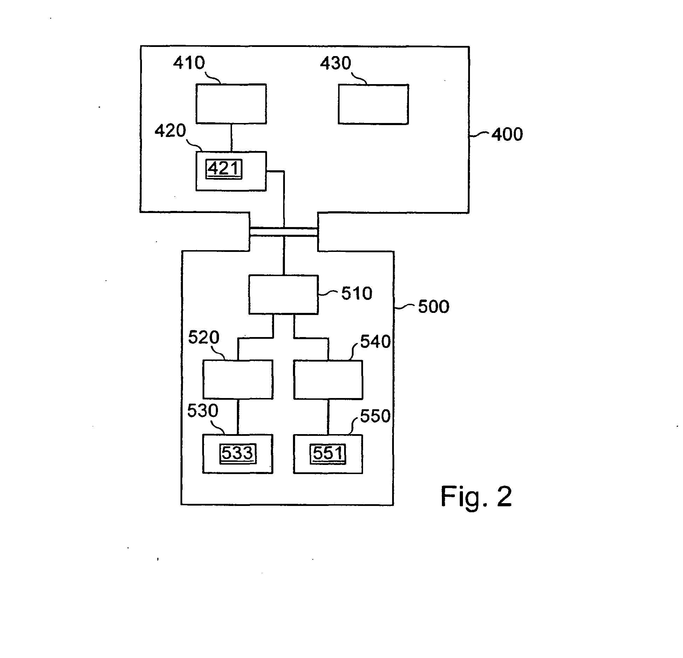

En référence à la figure 2, l'ordinateur 400 de la douane (ou de la police) comporte un processeur 410 et une mémoire 420. Une application de contrôle d'identité 421 exécutable sur l'ordinateur 400 est enregistrée dans la mémoire 420 (ou sur un support tel qu'un disque dur).

Un passeport électronique 500 comporte un concentrateur 510, auxquels sont reliés un lecteur de carte à microcircuit 540 contenant une carte à microcircuit 550, ainsi qu'un contrôleur de mémoire flash 520 lui-même relié à une mémoire flash 530.

Tous ces composants 520, 530, 540, 550 viennent du même fabricant dont l'identifiant est VID. Alternativement, ils peuvent venir de fabricants différents.

Ce fabricant a donné l'identifiant de produit PID5 aux contrôleurs de mémoire flash, et l'identifiant de produit PID6 aux cartes à microcircuit.

L'identifiant du contrôleur de mémoire flash 520 est ainsi VID/PID6/SN, SN étant le numéro de série du contrôleur de mémoire flash 520.

La carte à microcircuit 550 a été personnalisée après l'affectation du numéro de série au contrôleur de mémoire flash 520 et possède le même numéro de série que le contrôleur de mémoire flash 520. Son identifiant est VID/PID6/SN.

La carte 550 contient les informations textuelles d'identité 551 du titulaire du passeport (nom, prénom, date de naissance).

La mémoire flash 530 contient une photo 533 du titulaire du passeport, dans une partie de la mémoire 530 protégée en écriture ou non modifiable par le porteur.

Une première falsification envisageable consiste en le déplacement de la mémoire flash 530 d'une première clef sur une deuxième clef dont la carte à microcircuit contient des informations textuelles d'identité différentes.

Une deuxième falsification envisageable consiste en le déplacement de la carte à microcircuit 550 d'une première clef vers une deuxième clef dont la mémoire flash contient une photo différente.

Au passage de la douane, ou lors d'un contrôle d'identité, un opérateur connecte la clef passeport 500 à l'ordinateur 400.

L'application de contrôle d'identité 421 est alors exécutée par l'unité centrale 410.

Dans la suite de la mise en oeuvre de ce mode de réalisation, la communication entre la station hôte 400 et la clef 500 est sécurisée, par l'utilisation des moyens cryptographiques disponibles dans la carte à microcircuit 550, pour crypter et signer les informations transférées d'une entité à l'autre, notamment les identifiants.

Dans une première étape, l'application 421 recherche les cartes à microcircuit, en recherchant les composants électroniques ayant comme identifiant de produit PID6. Elle trouve la carte 550. Elle authentifie la carte à microcircuit 550 à l'aide de ses moyens cryptographiques.

Puis l'application 421 recherche les contrôleurs de mémoire flash en recherchant les composants électroniques ayant comme identifiant de produit PID5. Elle trouve le contrôleur de mémoire 520.

L'application 421 authentifie aussi le contrôleur de mémoire 520 à l'aide des moyens cryptographiques de la carte à microcircuit 550.

Dans une deuxième étape, l'application 421 lit le numéro de série des composants électroniques identifiés lors de la première étape, c'est à dire le contrôleur de mémoire 520 et la carte à microcircuit 550.

S'ils sont différents alors la clef est falsifiée, et l'application 421 en informe l'opérateur, en général le douanier.

S'ils sont identiques, alors l'application 421 charge la photo 563 dans la mémoire 420 de l'ordinateur et affiche la photo 563 à l'écran de l'ordinateur 400.

Le douanier compare la photo 563 avec l'apparence du porteur et lit à l'écran les informations textuelles sur l'identité du porteur contenues dans la carte à microcircuit 550.

La vérification du lien entre les numéros de série (ici de l'identité entre ceux-ci) permet de s'assurer que les informations dans la mémoire flash 530 et les informations dans la carte à microcircuit 550 sont bien appariées (c'est-à-dire fonctionnellement complémentaires l'une de l'autre) et que la vérification d'identité qui utilise les deux sources d'information peut être menée correctement.

La présente invention ne se limite pas à la forme de réalisation décrite ci-dessus et représentée au dessin. Elle concerne également toutes les variantes de réalisation à la portée de l'homme du métier.

L'homme du métier peut adapter les modes de réalisation décrits en fonction de ses connaissances générales. Notamment, il peut utiliser d'autres types de composants (membre d'une classe de composants électroniques USB ou non) et d'autres applications. L'interface et les moyens de communication peuvent être conformes à la norme ISO7816, ou à la norme ISO14443 ou à toute autre norme ou spécification.

Egalement, l'invention peut être mise en oeuvre en comparant la concaténation d'une chaîne de description de produit et d'un numéro de série des identifiants conformes à la norme USB de deux composants électroniques.

L'homme du métier peut également adapter l'invention en l'utilisant dans une situation où l'identifiant est dans une zone mémoire réinscriptible. Il sait également l'adapter à une situation où les identifiants de vendeur des différents composants électroniques ne sont pas égaux.

## Revendications

1. Station hôte comportant :
- des moyens de communication avec un premier composant électronique (520, 530), ledit premier composant électronique possédant un identifiant dit « premier », ledit premier identifiant répondant à une convention prédéterminée, les identifiants suivant ladite convention comprenant une partie dite « commune », commune aux composants électroniques d'une même famille, et une partie dite « unique » spécifique à chaque exemplaire de composant électronique au sein d'une même famille,
- des moyens de communication avec au moins un second composant électronique (550), ledit second composant électronique possédant un identifiant dit « second », ledit second identifiant étant conforme à ladite convention, et la partie commune dudit second identifiant étant différente de la partie commune dudit premier identifiant,
lesdits premier et second composants électroniques appartenant à une même entité électronique portable,
la station hôte étant **caractérisée en ce qu'**elle comporte en outre :
- des moyens de détermination d'au moins un composant électronique communiquant avec ladite station hôte et possédant un identifiant conforme à ladite convention prédéterminée et dont la partie commune est différente de la partie commune dudit premier identifiant, le deuxième composant électronique étant ainsi l'un des composants électroniques déterminés; et
- des moyens de vérification d'un appariement selon une règle prédéterminée de la partie unique dudit premier identifiant avec la partie unique dudit deuxième identifiant, ladite vérification visant à s'assurer que l'un des composants électroniques n'ait pas été illicitement remplacé par un autre au sein de ladite même entité électronique portable, ledit appariement déterminant le déroulement de l'exécution d'une application,
- des moyens pour exécuter ladite application dite « dépendante » et des moyens pour soumettre une exécution d'une partie au moins de ladite application dépendante à ladite vérification dudit appariement.

2. Station selon la revendication 1, dans laquelle les moyens de détermination sont des moyens de recherche du au moins un composant électronique communiquant avec ladite station hôte et possédant un identifiant conforme à ladite convention prédéterminée et dont la partie commune est différente de la partie commune dudit premier identifiant.

3. Station selon la revendication 2, dans laquelle les moyens de recherche mettent en oeuvre une recherche d'une pluralité de composants électroniques communiquant avec ladite station hôte et possédant un identifiant conforme à ladite convention prédéterminée et dont la partie commune est différente de la partie commune dudit premier identifiant, et comportant en outre des moyens de recherche du deuxième composant parmi ladite pluralité de composants électroniques.

4. Station hôte selon l'une des revendications 1 à 3, **caractérisée en ce qu'**une partie unique selon ladite convention comprend un numéro de série conforme à la norme USB.

5. Station hôte selon l'une des revendications 1 à 4, **caractérisée en ce que** ladite partie unique comprend la concaténation d'une chaîne de description de produit et d'un numéro de série conformes à la norme USB.

6. Station hôte selon l'une des revendications 1 à 5, **caractérisée en ce qu'**un appariement suivant ladite règle prédéterminée est réalisé lorsqu'une égalité arithmétique prédéterminée entre une partie de ladite partie unique du premier identifiant et la même partie de ladite partie unique dudit deuxième identifiant est réalisée.

7. Station hôte selon la revendication 6, **caractérisée en ce que** ladite égalité arithmétique est l'identité.

8. Station hôte selon l'une des revendications 1 à 7, **caractérisée en ce que** lesdits moyens de vérification comprennent une application dite « de vérification » apte à déterminer ledit premier identifiant.

9. Station hôte selon la revendication 8, **caractérisée en ce que** ladite application de vérification est apte à comparer
- un identifiant attribué à un volume logique correspondant audit premier composant électronique,
- avec chaque identifiant attribué aux volumes logiques correspondant aux composants électroniques communiquant avec ladite station hôte par des moyens de communication conformes à une norme prédéterminée,
en sorte de déterminer ledit premier identifiant.

10. Station hôte selon la revendication 9, **caractérisée en ce que**
- ledit identifiant attribué à un volume logique correspondant audit premier composant électronique est obtenu en utilisant la commande API Windows™ GetVolumeNameForVolumeMountPoint
- et chaque identifiant attribué aux volumes logiques correspondant aux composants électroniques communiquant avec ladite station hôte par des moyens de communication conformes à une norme prédéterminée est obtenu en utilisant au moins les commandes API Windows™ SetupDiEnumDevicelnfo et GetVolumeNameForVolumeMountPoint.

11. Station hôte selon la revendication 1 dans laquelle ladite application dépendante est apte à utiliser une fonctionnalité dudit premier composant électronique dite « première » et une fonctionnalité dudit second composant électronique dite « seconde », l'information portant sur l'appariement étant utilisée de telle sorte que l'application utilise les fonctionnalités des deux composants uniquement si ceux-ci sont appariés

12. Station hôte selon la revendication 1, **caractérisée en ce que** ladite application dépendante est apte à utiliser une fonctionnalité dudit premier composant dite « première » et une fonctionnalité dudit second composant dite « seconde ».

13. Station hôte selon la revendication 1, **caractérisée en ce que** ladite application dépendante comprend un programme de vérification d'identité, la fonctionnalité du premier composant comprenant la mise à disposition de ladite application d'un premier ensemble de données biométriques ou personnelles et la fonctionnalité du deuxième composant comprenant la mise à disposition de ladite application d'un deuxième ensemble de données biométriques ou personnelles.

14. Station hôte selon l'une des revendications 1 à 13, **caractérisée en ce que** le système d'exploitation de ladite station hôte est une version de Windows™.

15. Entité électronique portable comprenant
- un premier composant électronique (220, 230) possédant un identifiant dit « premier » ledit premier identifiant étant conforme à une convention prédéterminée, les identifiants suivant ladite convention prédéterminée comprenant une partie dite « commune », commune aux composants électroniques d'une même famille, et une partie dite « unique » spécifique à chaque exemplaire de composant électronique au sein d'une même famille,
- des moyens de communication (240) avec au moins un second composant électronique, appartenant à ladite entité électronique portable, de type possédant un identifiant dit « second », ledit second identifiant étant conforme à ladite convention, et la partie commune dudit second identifiant étant différente de la partie commune dudit premier identifiant,
- des moyens de communication avec une station hôte,
**caractérisée en ce que** l'entité électronique portable comporte en outre :
- des moyens de détermination d'au moins un composant électronique appartenant à ladite entité électronique portable communiquant avec ladite station hôte et possédant un identifiant conforme à ladite convention prédéterminée et dont la partie commune est différente de la partie commune dudit premier identifiant, le deuxième composant électronique étant ainsi l'un des composants électroniques déterminés ;
- des moyens de mise en oeuvre d'une vérification d'un appariement selon une règle prédéterminée de la partie unique dudit premier identifiant avec la partie unique dudit second identifiant, ladite vérification visant à s'assurer que l'un des composants électroniques n'ait pas été illicitement remplacé par un autre au sein de ladite entité électronique portable, ledit appariement déterminant le déroulement de l'exécution d'une application, et
- une mémoire conservant des instructions de ladite application dite « dépendante » apte à être au moins partiellement chargée sur une station hôte, et des moyens pour soumettre l'exécution d'une partie au moins de ladite application dépendante à ladite vérification dudit appariement.

16. Entité électronique selon la revendication 15, dans laquelle les moyens de détermination sont des moyens de recherche du au moins un composant électronique communiquant avec ladite station hôte et possédant un identifiant conforme à ladite convention prédéterminée et dont la partie commune est différente de la partie commune dudit premier identifiant.

17. Entité électronique selon la revendication 16, dans laquelle les moyens de recherche mettent en oeuvre une recherche d'une pluralité de composants électroniques communiquant avec ladite station hôte et possédant un identifiant conforme à ladite convention prédéterminée et dont la partie commune est différente de la partie commune dudit premier identifiant, et comportant en outre des moyens de recherche du deuxième composant parmi ladite pluralité de composants électroniques.

18. Entité électronique portable selon l'une des revendications 15 à 17, **caractérisée en ce que** lesdits moyens de communication avec au moins un second composant électronique comprennent un lecteur (240) de carte à microcircuit.

19. Entité électronique portable selon la revendication 18, **caractérisée en ce qu'**une carte à microcircuit est insérée dans ledit lecteur de carte à microcircuit, et **en ce que** ladite carte à microcircuit est personnalisée avec ledit second identifiant.

20. Entité électronique portable selon l'une des revendications 15 à 19, **caractérisée en ce que** lesdits moyens de mise en oeuvre d'une vérification d'un appariement comprennent une application dite « de vérification » apte à être mise en oeuvre par la station hôte.

21. Entité électronique portable selon la revendication 20, caractérisée ce que ladite application de vérification est à lancement automatique après la connexion de l'entité électronique portable à la station hôte.

22. Entité électronique portable selon l'une des revendications 20 ou 21, **caractérisée en ce que** ledit premier composant électronique comprenant une mémoire conservant les instructions de ladite application de vérification, ladite application de vérification est apte à déterminer ledit premier identifiant.

23. Entité électronique portable selon la revendication 22, **caractérisée en ce que** ladite application de vérification est apte à comparer
- un identifiant attribué à un volume logique correspondant au périphérique mémorisant ladite application,
- avec chaque identifiant attribué aux volumes logiques correspondant aux composants électroniques communiquant avec ladite station hôte par des moyens de communication conformes à une norme prédéterminée,
en sorte de déterminer ledit premier identifiant.

24. Entité électronique portable selon la revendication 23, **caractérisée en ce que**
- ledit identifiant attribué à un volume logique correspondant au périphérique mémorisant ladite application est obtenu en utilisant la commande API Windows™ GetVolumeNameForVolumeMountPoint
- et chaque identifiant attribué aux volumes logiques correspondant aux composants électroniques communiquant avec ladite station hôte par des moyens de communication conformes à une norme prédéterminée est obtenu en utilisant au moins les commandes API Windows™ SetupDiEnumDevicelnfo et GetVolumeNameForVolumeMountPoint.

25. Entité électronique portable selon l'une des revendications 15 à 24, dans laquelle ladite application dépendante est apte à utiliser une fonctionnalité dudit premier composant électronique dite « première » et une fonctionnalité dudit second composant électronique dite « seconde », l'information portant sur l'appariement étant utilisée de telle sorte que l'application utilise les fonctionnalités des deux composants uniquement si ceux-ci sont appariés.

26. Procédé de vérification d'un appariement de composants électroniques (220, 230, 520, 530) communiquant avec une station hôte (100 ; 400), les composants électroniques étant respectivement associés à des identifiants, lesdits identifiants répondant à une convention prédéterminée, les identifiants suivant ladite convention comprenant une partie dite « commune », commune aux composants électroniques d'une même famille, et une partie dite « unique » spécifique à chaque exemplaire de composant électronique au sein d'une même famille, dans lequel un premier composant électronique, possédant un identifiant dit « premier » conforme à ladite convention, communique avec la station hôte,
lesdits composants électroniques appartenant à une même entité électronique portable,
**caractérisé en ce que** le procédé comporte les étapes suivantes de :
- détermination d'au moins un composant électronique communiquant avec ladite station hôte et possédant un identifiant conforme à ladite convention prédéterminée et dont la partie commune est différente de la partie commune dudit premier identifiant ;
- une étape de vérification de l'appariement selon une règle prédéterminée entre les parties uniques du premier identifiant et d'un deuxième identifiant d'un deuxième composant électronique parmi les composants électroniques déterminés, ladite vérification visant à s'assurer que l'un des composants électroniques n'ait pas été illicitement remplacé par un autre au sein de ladite même entité électronique portable, ledit appariement déterminant le déroulement de l'exécution d'une application, et
- une étape d'exécution de ladite application dite « dépendante », une partie au moins de ladite application dépendante étant soumise à ladite vérification dudit appariement.

27. Procédé selon ia revendication 26, dans iequei l'étape de détermination est une étape de recherche du au moins un composant électronique communiquant avec ladite station hôte et possédant un identifiant conforme à ladite convention prédéterminée et dont la partie commune est différente de la partie commune dudit premier identifiant.

28. Procédé selon la revendication 27, dans lequel lors de l'étape de recherche, il est recherché une pluralité de composants électroniques communiquant avec ladite station hôte et possédant un identifiant conforme à ladite convention prédéterminée et dont la partie commune est différente de la partie commune dudit premier identifiant, et comportant en outre une étape de recherche du deuxième composant parmi ladite pluralité de composants électroniques.

29. Procédé selon l'une des revendications 26 à 28, **caractérisé en ce qu'**il comporte en outre une étape de lecture d'un identifiant d'une carte à microcircuit comprise dans un composant électronique, ledit identifiant étant inscrit dans un fichier dans une mémoire de ladite carte à microcircuit.

30. Procédé selon la revendication 29, **caractérisé en ce que** ladite carte à microcircuit étant incluse dans le deuxième composant électronique, il comporte une étape préalable de personnalisation électronique de ladite carte à microcircuit au cours de laquelle un identifiant comportant un numéro de série correspondant au numéro de série d'un contrôleur de mémoire inclus dans le premier composant électronique est inscrit dans une mémoire de ladite carte à microcircuit.

31. Procédé selon l'une des revendications 26 à 30, dans lequel ladite application dépendante est apte à utiliser une fonctionnalité dudit premier composant électronique dite « première » et une fonctionnalité dudit second composant électronique dite « seconde », l'information portant sur l'appariement étant utilisée de telle sorte que l'application utilise ies fonctionnalité des deux composants uniquement si ceux-ci sont appariés.

## Patentansprüche

1. Hoststation, die Folgendes umfasst:
- Kommunikationsmittel mit einem ersten elektronischen Bauteil (520, 530), wobei das erste elektronische Bauteil einen sogenannten "ersten" Identifikator besitzt, wobei der erste Identifikator einer vorbestimmten Vereinbarung entspricht, wobei die Identifikatoren gemäß der Vereinbarung einen sogenannten "gemeinsamen" Teil umfassen, den die elektronischen Bauteile ein und derselben Familie gemeinsam haben, und einen sogenannten "einmaligen" Teil, der für jedes elektronische Bauteilexemplar innerhalb ein und derselben Familie einmalig ist,
- Kommunikationsmittel mit mindestens einem zweiten elektronischen Bauteil (550), wobei das zweite elektronische Bauteil einen sogenannten "zweiten" Identifikator besitzt, wobei der zweite Identifikator der Vereinbarung entspricht und der gemeinsame Teil des zweiten Identifikators von dem gemeinsamen Teil des ersten Identifikators verschieden ist,
wobei die ersten und zweiten elektronischen Bauteile zu ein und derselben tragbaren elektronischen Einheit gehören,
**dadurch gekennzeichnet, dass** sie ferner Folgendes umfasst:
- Mittel zum Bestimmen mindestens eines elektronischen Bauteils, das mit der Hoststation kommuniziert und einen Identifikator gemäß der vorbestimmten Vereinbarung besitzt, und dessen gemeinsamer Teil von dem gemeinsamen Teil des ersten Identifikators verschieden ist, wobei das zweite elektronische Bauteil daher eines der bestimmten elektronischen Bauteile ist, und
- Mittel zum Prüfen einer Paarung gemäß einer vorbestimmten Regel des einmaligen Teils des ersten Identifikators mit dem einmaligen Teil des zweiten Identifikators, wobei die Prüfung darauf abzielt sicherzustellen, dass eines der elektronischen Bauteile nicht unrechtmäßig durch ein anderes innerhalb derselben tragbaren elektronischen Einheit ersetzt wurde, wobei die Paarung die Abwicklung der Ausführung einer Anwendung bestimmt,
- Mittel zum Ausführen der sogenannten "abhängigen" Anwendung und Mittel zum Unterbreiten einer Ausführung mindestens eines Teils der abhängigen Anwendung für die Prüfung der Paarung.

2. Hoststation nach Anspruch 1, wobei die Bestimmungsmittel Suchmittel des mindestens einen elektronischen Bauteils sind, das mit der Hoststation kommuniziert und einen Identifikator gemäß der vorbestimmten Vereinbarung besitzt, und dessen gemeinsamer Teil von dem gemeinsamen Teil des ersten Identifikators verschieden ist.

3. Hoststation nach Anspruch 2, wobei die Suchmittel eine Suche einer Mehrzahl elektronischer Bauteile, die mit der Hoststation kommunizieren und einen Identifikator gemäß der vorbestimmten Vereinbarung besitzen und deren gemeinsamer Teil von dem gemeinsamen Teil des ersten Identifikators verschieden ist, umsetzen und ferner umfassend Suchmittel des zweiten Bauteils in der Mehrzahl elektronischer Bauteile.

4. Hoststation nach einem der Ansprüche 1 bis 3, **dadurch gekennzeichnet, dass** ein einmaliger Teil gemäß der Vereinbarung eine Seriennummer gemäß der Norm USB umfasst.

5. Hoststation nach einem der Ansprüche 1 bis 4, **dadurch gekennzeichnet, dass** der einmalige Teil die Konkatenation einer Produktbeschreibungskette und einer Seriennummer gemäß der Norm USB umfasst.

6. Hoststation nach einem der Ansprüche 1 bis 5, **dadurch gekennzeichnet, dass** eine Paarung gemäß der vorbestimmten Regel ausgeführt wird, wenn eine vorbestimmte arithmetische Gleichheit zwischen einem Teil des einmaligen Teils des ersten Identifikators und demselben Teil des einmaligen Teils des zweiten Identifikators ausgeführt wird.

7. Hoststation nach Anspruch 6, **dadurch gekennzeichnet, dass** die arithmetische Gleichheit die Identität ist.

8. Hoststation nach einem der Ansprüche 1 bis 7, **dadurch gekennzeichnet, dass** die Prüfmittel eine sogenannte "Prüf"-Anwendung umfassen, die geeignet ist, um den ersten Identifikator zu bestimmen.

9. Hoststation nach Anspruch 8, **dadurch gekennzeichnet, dass** die Prüfanwendung geeignet ist, um Folgendes zu vergleichen
- einen Identifikator, der einem logischen Volumen, das dem ersten elektronischen Bauteil entspricht, zugeordnet ist,
- mit jedem Identifikator, der den logischen Volumen zugeordnet ist, die den elektronischen Bauteilen, die mit der Hoststation durch Kommunikationsmittel gemäß einer vorbestimmten Norm kommunizieren, entsprechen,
zur Bestimmung des ersten Identifikators.

10. Hoststation nach Anspruch 9, **dadurch gekennzeichnet, dass**
- der Identifikator, der einem logischen Volumen zugeordnet ist, das dem ersten elektronischen Bauteil entspricht, unter Verwenden des API Windows™-Befehls GetVolumeNameForVolumeMountPoint erhalten wird,
- und jeder Identifikator, der den logischen Volumen zugeordnet ist, die den elektronischen Bauteilen entsprechen, die mit der Hoststation durch Kommunikationsmittel gemäß einer vorbestimmten Norm kommunizieren, unter Verwenden mindestens der API Windows™-Befehle SetupDiEnumDeviceInfo und GetVolumeNameForVolumeMountPoint erhalten wird.

11. Hoststation nach Anspruch 1, bei der die abhängige Anwendung geeignet ist, eine Funktionalität des ersten sogenannten "ersten" elektronischen Bauteils und eine Funktionalität des zweiten sogenannten "zweiten" elektronischen Bauteils zu verwenden, wobei die Information, die die Paarung betrifft, derart verwendet wird, dass die Anwendung die Funktionalitäten der zwei Bauteile nur verwendet, wenn sie gepaart sind.

12. Hoststation nach Anspruch 1, **dadurch gekennzeichnet, dass** die abhängige Anwendung geeignet ist, um eine Funktionalität des ersten sogenannten "ersten" Bauteils und eine Funktionalität des zweiten sogenannten "zweiten" Bauteils zu verwenden.

13. Hoststation nach Anspruch 1, **dadurch gekennzeichnet, dass** die abhängige Anwendung ein Identitätsprüfprogramm umfasst, wobei die Funktionalität des ersten Bauteils die Bereitstellung der Anwendung einer ersten Einheit biometrischer oder persönlicher Daten umfasst, und die Funktionalität des zweiten Bauteils die Bereitstellung der Anwendung einer zweiten Einheit biometrischer oder persönlicher Daten umfasst.

14. Hoststation nach einem der Ansprüche 1 bis 13, **dadurch gekennzeichnet, dass** das Betriebssystem der Hoststation eine Version von Windows™ ist.

15. Tragbare elektronische Einheit, die Folgendes umfasst
- ein erstes elektronisches Bauteil (220, 230), das einen sogenannten "ersten" Identifikator besitzt, wobei der erste Identifikator mit einer vorbestimmten Vereinbarung übereinstimmt, wobei die Identifikatoren gemäß der vorbestimmten Vereinbarung einen sogenannten "gemeinsamen" Teil umfassen, den die elektronischen Bauteile ein und derselben Familie gemeinsam haben, und einen sogenannten "einmaligen" Teil, der für jedes elektronische Bauteilexemplar in ein und derselben Familie spezifisch ist, umfassen,
- Kommunikationsmittel (240) mit mindestens einem zweiten elektronischen Bauteil, das zu der tragbaren elektronischen Einheit gehört, des Typs, der einen sogenannten "zweiten" Identifikator umfasst, wobei der zweite Identifikator der Vereinbarung entspricht, und der gemeinsame Teil des zweiten Identifikators von dem gemeinsamen Teil des ersten Identifikators verschieden ist,
- Kommunikationsmittel mit einer Hoststation,
**dadurch gekennzeichnet, dass** die tragbare elektronische Einheit außerdem Folgendes umfasst
- Mittel zum Bestimmen mindestens eines elektronischen Bauteils, das zu der tragbaren elektronischen Einheit gehört, die mit der Hoststation kommuniziert und einen Identifikator gemäß der vorbestimmten Vereinbarung besitzt und dessen gemeinsamer Teil von dem gemeinsamen Teil des ersten Identifikators verschieden ist, wobei das zweite elektronische Bauteil daher eines der bestimmten elektronischen Bauteile ist,
- Mittel zum Umsetzen einer Prüfung einer Paarung gemäß einer vorbestimmten Regel des einmaligen Teils des ersten Identifikators mit dem einmaligen Teil des zweiten Identifikators, wobei die Prüfung darauf abzielt sicherzustellen, dass eines der elektronischen Bauteile nicht unrechtmäßig durch ein anderes innerhalb der tragbaren elektronischen Einheit ersetzt wurde, wobei die Paarung die Abwicklung der Ausführung einer Anwendung bestimmt, und
- einen Speicher, der Anweisungen der sogenannten "abhängigen" Anwendung verwahrt, die geeignet ist, um mindestens teilweise auf eine Hoststation geladen zu werden, und Mittel, um die Ausführung mindestens eines Teils der abhängigen Anwendung der Prüfung der Paarung zu unterziehen.

16. Elektronische Einheit nach Anspruch 15, wobei die Bestimmungsmittel Suchmittel des mindestens einen elektronischen Bauteils, das mit der Hoststation kommuniziert und einen Identifikator gemäß der vorbestimmten Vereinbarung besitzt und dessen gemeinsamer Teil von dem gemeinsamen Teil des ersten Identifikators verschieden ist, sind.

17. Elektronische Einheit nach Anspruch 16, wobei die Suchmittel eine Suche einer Mehrzahl elektronischer Bauteile umsetzen, die mit der Hoststation kommuniziert und einen Identifikator gemäß der vorbestimmten Vereinbarung besitzt, und dessen gemeinsamer Teil von dem gemeinsamen Teil des ersten Identifikators verschieden ist, und ferner umfassend Suchmittel des zweiten Bauteils in der Mehrzahl elektronischer Bauteile.

18. Tragbare elektronische Einheit nach einem der Ansprüche 15 bis 17, **dadurch gekennzeichnet, dass** die Kommunikationsmittel mit mindestens einem zweiten elektronischen Bauteil ein Mikroschaltungs-Kartenlesegerät (240) umfassen.

19. Tragbare elektronische Einheit nach Anspruch 18, **dadurch gekennzeichnet, dass** eine Mikroschaltungskarte in das Mikroschaltungs-Kartenlesegerät eingefügt ist und dass die Mikroschaltungskarte mit dem zweiten Identifikator personalisiert ist.

20. Tragbare elektronische Einheit nach einem der Ansprüche 15 bis 19, **dadurch gekennzeichnet, dass** die Mittel zum Umsetzen einer Prüfung einer Paarung eine sogenannte "Prüf"-Anwendung umfassen, die geeignet ist, um von der Hoststation umgesetzt zu werden.

21. Tragbare elektronische Einheit nach Anspruch 20, **dadurch gekennzeichnet, dass** die Prüfanwendung automatisches Starten nach dem Anschließen der tragbaren elektronischen Einheit an die Hoststation hat.

22. Tragbare elektronische Einheit nach einem der Ansprüche 20 oder 21, **dadurch gekennzeichnet, dass** das erste elektronische Bauteil einen Speicher umfasst, der die Anweisungen der Prüfanwendung verwahrt, wobei die Prüfanwendung geeignet ist, den ersten Identifikator zu bestimmen.

23. Tragbare elektronische Einheit nach Anspruch 22, **dadurch gekennzeichnet, dass** die Prüfanwendung geeignet ist, um Folgendes zu vergleichen
- einen Identifikator, der einem logischen Volumen zugeordnet ist, das dem Peripheriegerät, das die Anwendung speichert, entspricht,
- mit jedem Identifikator, der den logischen Volumen zugeordnet ist, die den elektronischen Bauteilen, die mit der Hoststation durch Kommunikationsmittel gemäß einer vorbestimmten Norm kommunizieren, entsprechen,
zur Bestimmung des ersten Identifikators.

24. Tragbare elektronische Einheit nach Anspruch 23, **dadurch gekennzeichnet, dass**
- der Identifikator, der einem logischen Volumen zugeordnet ist, das dem Peripheriegerät entspricht, das die Anwendung speichert, unter Verwenden des API Windows™-Befehls GetVolumeNameForVolumeMountPoint erhalten wird,
- und jeder Identifikator, der den logischen Volumen zugeordnet ist, die den elektronischen Bauteilen entsprechen, die mit der Hoststation durch Kommunikationsmittel gemäß einer vorbestimmten Norm kommunizieren, unter Verwenden mindestens der API Windows™-Befehle SetupDiEnumDeviceInfo und GetVolumeNameForVolumeMountPoint erhalten wird.

25. Tragbare elektronische Einheit nach einem der Ansprüche 15 bis 24, wobei die abhängige Anwendung geeignet ist, eine Funktionalität des ersten sogenannten "ersten" elektronischen Bauteils und eine Funktionalität des zweiten sogenannten "zweiten" elektronischen Bauteils zu verwenden, wobei die Information, die die Paarung betrifft, derart verwendet wird, dass die Anwendung die Funktionalitäten der zwei Bauteile nur verwendet, wenn diese gepaart sind.

26. Prüfverfahren einer Paarung elektronischer Bauteile (220, 230, 520, 530), die mit einer Hoststation (100; 400) kommunizieren, wobei die elektronischen Bauteile jeweils mit Identifikatoren assoziiert sind, wobei die Identifikatoren einer vorbestimmten Vereinbarung entsprechen, wobei die Identifikatoren gemäß der Vereinbarung einen sogenannten "gemeinsamen" Teil umfassen, den die elektronischen Bauteile ein und derselben Familie gemeinsam haben, und einen sogenannten "einmaligen" Teil, der für jedes elektronische Bauteilexemplar innerhalb ein und derselben Familie spezifisch ist, wobei ein erstes elektronisches Bauteil, das einen sogenannten "ersten" Identifikator gemäß der Vereinbarung besitzt, mit der Hoststation kommuniziert,
wobei die elektronischen Bauteile zu ein und derselben tragbaren elektronischen Einheit gehören,
**dadurch gekennzeichnet, dass** das Verfahren die folgenden Schritte umfasst:
- Bestimmen mindestens eines elektronischen Bauteils, das mit der Hoststation kommuniziert und einen Identifikator gemäß der vorbestimmten Vereinbarung besitzt, und dessen gemeinsamer Teil von dem gemeinsamen Teil des ersten Identifikators verschieden ist,
- einen Prüfschritt der Paarung gemäß einer vorbestimmten Regel zwischen den einmaligen Teilen des ersten Identifikators und einem zweiten Identifikator eines zweiten elektronischen Bauteils unter den bestimmten elektronischen Bauteilen, wobei die Prüfung darauf abzielt sicherzustellen, dass eines der elektronischen Bauteile nicht unrechtmäßig durch ein anderes innerhalb ein und derselben tragbaren elektronischen Einheit ersetzt wurde, wobei die Paarung die Abwicklung der Ausführung einer Anwendung bestimmt, und
- einen Ausführungsschritt der sogenannten "abhängigen" Anwendung, wobei mindestens ein Teil der abhängigen Anwendung der Prüfung der Paarung unterzogen wird.

27. Verfahren nach Anspruch 26, wobei der Bestimmungsschritt ein Suchschritt des mindestens einen elektronischen Bauteils, das mit der Hoststation kommuniziert und einen Identifikator gemäß der vorbestimmten Vereinbarung besitzt und dessen gemeinsamer Teil von dem gemeinsamen Teil des ersten Identifikators verschieden ist, ist.

28. Verfahren nach Anspruch 27, wobei bei dem Suchschritt eine Mehrzahl elektronischer Bauteile gesucht wird, die mit der Hoststation kommunizieren und einen Identifikator gemäß der vorbestimmten Vereinbarung besitzen und deren gemeinsamer Teil von dem gemeinsamen Teil des ersten Identifikators verschieden ist, und ferner umfassend einen Suchschritt des zweiten Bauteils in der Mehrzahl elektronischer Bauteile.

29. Verfahren nach einem der Ansprüche 26 bis 28, **dadurch gekennzeichnet, dass** es außerdem einen Leseschritt eines Identifikators einer Mikroschaltungskarte umfasst, die in einem elektronischen Bauteil enthalten ist, wobei der Identifikator in eine Datei in einen Speicher der Mikroschaltungskarte geschrieben ist.

30. Verfahren nach Anspruch 29, **dadurch gekennzeichnet, dass**, da die Mikroschaltungskarte in dem zweiten elektronischen Bauteil enthalten ist, das Verfahren einen vorausgehenden Schritt der elektronischen Personalisierung der Mikroschaltungskarte umfasst, in dessen Verlauf ein Identifikator, der eine Seriennummer umfasst, die der Seriennummer eines Speicherprüfers, der in dem ersten elektronischen Bauteil enthalten ist, entspricht, in einen Speicher der Mikroschaltungskarte geschrieben wird.

31. Verfahren nach einem der Ansprüche 26 bis 30, wobei die abhängige Anwendung geeignet ist, eine Funktionalität des ersten sogenannten "ersten" elektronischen Bauteils und eine Funktionalität des zweiten sogenannten "zweiten" elektronischen Bauteils zu verwenden, wobei die Information die Paarung betrifft, die derart verwendet wird, dass die Anwendung die Funktionalitäten der zwei Bauteile nur verwendet, wenn diese gepaart sind.

## Claims

1. Host station including:
- means for communication with a first electronic component (520, 530), said first electronic component having a "first" identifier, said first identifier conforming to a predetermined convention, identifiers according to said convention comprising a "common" part, common to electronic components of the same family, and a "unique" part specific to each instance of an electronic component in the same family,
- means for communication with at least one second electronic component (550), said second electronic component having a "second" identifier, said second identifier conforming to said convention, and the common part of said second identifier being different from the common part of said first identifier,
said first and second electronic components belonging to one and the same portable electronic entity,
the host station being **characterized in that** it furthermore comprises:
- means for determining at least one electronic component communicating with said host station and possessing an identifier conforming with said predetermined convention and whose common part is different from the common part of said first identifier, the second electronic component thus being one of the determined electronic components; and
- means for verifying a pairing according to a predetermined rule of the unique part of said first identifier with the unique part of said second identifier, said verification being aimed at ensuring that one of the electronic components has not been illicitly replaced with another within said same portable electronic entity, said pairing determining the progress of the execution of an application,
- means for executing said so-called "dependent" application and means for submitting an execution of a part at least of said dependent application to said verification of said pairing.

2. Station according to Claim 1, in which the determining means are means for searching for the at least one electronic component communicating with said host station and possessing an identifier conforming to said predetermined convention and whose common part is different from the common part of said first identifier.

3. Station according to Claim 2, in which the search means implement a search for a plurality of electronic components communicating with said host station and possessing an identifier conforming with said predetermined convention and whose common part is different from the common part of said first identifier, and furthermore comprising means of searching for the second component from among said plurality of electronic components.

4. Host station according to one of Claims 1 to 3, **characterized in that** a unique part according to said convention comprises a serial number conforming to the USB standard.

5. Host station according to one of Claims 1 to 4, **characterized in that** said unique part comprises the concatenation of a product description string and a serial number both conforming to the USB standard.

6. Host station according to one of Claims 1 to 5, **characterized in that** matching in accordance with said predetermined rule is achieved if a predetermined arithmetic equality between a portion of said unique part of the first identifier and the same portion of said unique part of said second identifier is achieved.

7. Host station according to Claim 6, **characterized in that** said arithmetic equality is identity.

8. Host station according to one of Claims 1 to 7, **characterized in that** said verification means comprise a "verification" application adapted to determine said first identifier.

9. Host station according to Claim 8, **characterized in that** said verification application is adapted to compare:
- an identifier assigned to a logical volume corresponding to said first electronic component,
- with each identifier assigned to the logical volumes corresponding to the electronic components communicating with said host station via communication means conforming to a predetermined standard,
so as to determine said first identifier.

10. Host station according to Claim 9, **characterized in that**:
- said identifier reassigned to a logical volume corresponding to said first electronic component is obtained using the Windows™ API command GetVolumeNameForVolumeMountPoint, and
- each identifier assigned to the logical volumes corresponding to the electronic components communicating with said host station via communication means conforming to a predetermined standard is achieved using at least the Windows™ API commands SetupDiEnumDeviceInfo and GetVolumeNameForVolumeMountPoint.

11. Host station according to Claim 1, in which said dependent application is able to use a so-called "first" functionality of said first electronic component and a so-called "second" functionality of said second component, the information pertaining to the pairing being used in such a way that the application uses the functionalities of the two components only if the latter are paired.

12. Host station according to Claim 1, **characterized in that** said dependent application is adapted to use a "first" function of said first component and a "second" function of said second component.

13. Host station according to Claim 1, **characterized in that** said dependent application comprises an identity verification program, the function of the first component comprising making available to said application a first set of biometric or personal data and the function of the second component comprising making available to said application a second set of biometric or personal data.

14. Host station according to one of Claims 1 to 13, **characterized in that** the operating system of said host station is a version of Windows™.

15. Portable electronic entity comprising:
- a first electronic component (220, 230) having a "first" identifier, said first identifier conforming to a predetermined convention, identifiers according to said convention comprising a "common" part, common to electronic components of the same family, and a "unique" part specific to each instance of an electronic component in the same family,
- means (240) for communication with at least one second electronic component, belonging to said portable electronic entity, of the type having a "second" identifier, said second identifier conforming to said convention, and the common part of said second identifier being different from the common part of said first identifier,
- means for communication with a host station, **characterized in that** the portable electronic entity further includes:
- means for determining at least one electronic component belonging to said portable electronic entity communicating with said host station and possessing an identifier conforming with said predetermined convention and whose common part is different from the common part of said first identifier, the second electronic component thus being one of the electronic components determined;
- means of implementing a verification of a pairing according to a predetermined rule of the unique part of said first identifier with the unique part of said second identifier, said verification being aimed at ensuring that one of the electronic components has not been illicitly replaced by another within said portable electronic entity, said pairing determining the progress of the execution of an application, and
- a memory holding instructions of said so-called "dependent" application able to be at least partially loaded onto a host station, and means for submitting the execution of a part at least of said dependent application to said verification of said pairing.

16. Electronic entity according to Claim 15, in which the determining means are for searching for the at least one electronic component communicating with said host station and possessing an identifier conforming to said predetermined convention and whose common part is different from the common part of said first identifier.

17. Electronic entity according to Claim 16, in which the search means implement a search for a plurality of electronic components communicating with said host station and possessing an identifier conforming with said predetermined convention and whose common part is different from the common part of said first identifier, and furthermore comprising means of searching for the second component from among said plurality of electronic components.

18. Portable electronic entity according to one of Claims 15 to 17, **characterized in that** said means for communication with at least one second electronic component comprise a microcircuit card reader (240).

19. Portable electronic entity according to Claim 18, **characterized in that** a microcircuit card is inserted into said microcircuit card reader and **in that** said microcircuit card is personalized with said second identifier.

20. Portable electronic entity according to one of Claims 15 to 19, **characterized in that** said means for effecting a verification of matching comprise a "verification" application adapted to be executed by the host station.

21. Portable electronic entity according to Claim 20, **characterized in that** said verification application is launched automatically after connection of the portable electronic entity to the host station.

22. Portable electronic entity according to either of Claims 20 and 21, **characterized in that** said first electronic component comprising a memory storing the instructions of said verification application, said verification application is adapted to determine said first identifier.

23. Portable electronic entity according to Claim 22, **characterized in that** said verification application is adapted to compare:
- an identifier assigned to a logical volume corresponding to the peripheral storing said application,
- with each identifier assigned to the logical volumes corresponding to the electronic components communicating with said host station via communication means conforming to a predetermined standard,
so as to determine said first identifier.

24. Portable electronic entity according to Claim 23, **characterized in that**:
- said identifier assigned to a logical volume corresponding to the peripheral storing said application is obtained using the Windows™ API command GetVolumeNameForVolumeMountPoint, and
- each identifier assigned to the logical volumes corresponding to the electronic components communicating with said host station via communication means conforming to a predetermined standard is obtained using at least the Windows™ API commands SetupDiEnumDeviceInfo and GetVolumeNameForVolumeMountPoint.

25. Portable electronic entity according to one of Claims 15 to 24, in which said dependent application is able to use a so-called "first" functionality of said first electronic component and a so-called "second" functionality of said second electronic component, the information pertaining to the pairing being used in such a way that the application uses the functionalities of the two components only if the latter are paired.

26. Method of verification of a pairing of electronic components (220, 230, 520, 530) communicating with a host station (100; 400), the electronic components being respectively associated with the identifiers, said identifiers complying with a predetermined convention, the identifiers according to said convention comprising a so-called "common" part, common to the electronic components of one and the same family, and a so-called "unique" part specific to each instance in the electronic component within one and the same family, in which a first electronic component, possessing a so-called "first" identifier in accordance with said convention, communicates with the host station,
said electronic components belonging to one and the same portable electronic entity,
**characterized in that** the method includes the following steps of:
- determining at least one electronic component communicating with said host station and possessing an identifier conforming with said predetermined convention and whose common part is different from the common part of said first identifier;
- a step of verifying the pairing according to a predetermined rule of the unique part of the first identifier with the unique part of a second identifier of a second electronic component from among the determined electronic components, said verification being aimed at ensuring that one of the electronic components has not been illicitly replaced with another within said same portable electronic entity, said pairing determining the progress of the execution of an application,
- a step of executing said so-called "dependent" application, a part at least of said dependent application being submitted to said verification of said pairing.

27. Method according to Claim 26, in which the step of determining is a step of searching for the at least one electronic component communicating with said host station and possessing an identifier conforming to said predetermined convention and whose common part is different from the common part of said first identifier.

28. Method according to Claim 27, in which during the search step, a search is made for a plurality of electronic components communicating with said host station and possessing an identifier conforming with said predetermined convention and whose common part is different from the common part of said first identifier, and furthermore comprising a step of searching for the second component from among said plurality of electronic components.

29. Method according to one of Claims 26 to 28, **characterized in that** it further includes a step of reading an identifier of a microcircuit card contained in an electronic component, said identifier being written into a file in a memory of said microcircuit card.

30. Method according to Claim 29, **characterized in that**, said microcircuit card being included in the second electronic component, it includes a preliminary step of electronic personalization of said microcircuit card during which an identifier including a serial number corresponding to the serial number of a memory controller included in the first electronic component is written into a memory of said microcircuit card.

31. Method according to one of Claims 26 to 30, in which said dependent application is able to use a so-called "first" functionality of said first electronic component and a so-called "second" functionality of said second component, the information pertaining to the pairing being used in such a way that the application uses the functionalities of the two components only if the latter are paired.
